# EUROPEAN PATENT APPLICATION

(11) **EP 1 580 578 A1**
(43) Date of publication of application: **28.09.2005**
(21) Application number: 03813295.7
(22) Date of filing: 28.11.2003
(51) Int. Cl.: G02B 1/04, C08F 220/14, G02B 6/00

(54) **FLUORINE-CONTAINING OPTICAL MATERIAL AND FLUORINE-CONTAINING COPOLYMER**

(30) Priority: 13.12.2002 JP 2002362922
(71) Applicant: DAIKIN INDUSTRIES, LTD., Osaka 530-8323 (JP)
(72) Inventor: TANAKA, Yoshito, Yodogawa-seisakusho, Settsu-shi, Osaka 566-8585 (JP); ARAKI, Takayuki, Yodogawa-seisakusho, Settsu-shi, Osaka 566-8585 (JP)
(74) Representative: HOFFMANN EITLE
(86) International application number: PCT/JP2003/015204
(87) International publication number: WO 2004/055554

(57) **Abstract**

There is provided a fluorine-containing optical material and a fluorine-containing copolymer which have excellent heat resistance and flexibility in addition to optical characteristics, particularly a material suitable as a clad material for heat resistant plastic optical fiber. The fluorine-containing optical material comprises from 15 to 62 % by mole of a structural unit (a) derived from hexafluoroneopentyl methacrylate, from 12 to 70 % by mole of a structural unit (b) derived from methyl methacrylate and from 1 to 40 % by mole of a structural unit (c) which is derived from a fluorine-containing monomer and is copolymerizable therewith, and is used as various optical materials, and is useful particularly as a clad material for heat resistant optical fiber.

## Description

### TECHNICAL FIELD

The present invention relates to a fluorine-containing optical material and a fluorine-containing copolymer which are excellent in heat resistance and flexibility in addition to optical characteristics. The optical material of the present invention is suitable particularly as a clad material for heat resistant plastic optical fiber.

### BACKGROUND ART

Hitherto polycarbonate, non-crystalline polyolefin, acrylic resin and the like have been studied as a plastic optical material, but there have been no materials having high heat resistance (high glass transition temperature Tg) and a low refractive index. For example, with respect to polycarbonate, heat resistance is high (Tg: 145°C) but a refractive index is also high (1.58). It is just the same with non-crystalline polyolefin (Tg: 171°C, refractive index: 1.51) . With respect to an acrylic material, a refractive index thereof is decreased (not more than 1.45) by using a fluorinated acrylate, but an obtained polymer is insufficient in heat resistance (Tg<100°C).

Recently particularly plastic optical fibers have been used as a cable for LAN of cars. For such plastic optical fibers, polymethyl methacrylate (PMMA) is used as a core material therefor because of excellent transparency and a high refractive index, and a material having a refractive index lower than that of PMMA is needed as a clad material. In that case, as mentioned above, a material having a low refractive index has a problem with heat resistance.

Fluorine-containing copolymers obtained from perfluoro-t-butyl methacrylate (JP49-129545A), hexafluoroneopentyl methacrylate (JP1-149808A, JP2-110112A, JP2-1711A) or α-fluoroacrylate (JP61-118808A) are proposed as materials satisfying such properties mentioned above.

However, perfluoro-t-butyl methacrylate has a disadvantage that flexibility of an obtained copolymer is lowered and adhesion to a substrate (core material) is inferior. Also in the case of α-fluoroacrylate, a preparation process is restricted and therefore, cost for preparing a copolymer becomes high and coloring arises due to heating, which are points to be improved.

Also with respect to a copolymer comprising hexafluoroneopentyl methacrylate (hereinafter referred to as 6FNPM as case demands) as a copolymerizable component, a high Tg and a low refractive index are not exhibited in all ranges of polymer composition disclosed in the mentioned patent publications. Particularly when the proportion of 6FNPM is high, there is a case where the copolymer becomes fragile as an optical material and flexibility becomes insufficient. On the other hand, when the proportion of 6FNPM is low, effects of making Tg high and refractive index low which are inherent characteristics of 6FNPM are not obtained.

For example, JP1-149808A discloses an optical material obtained from a copolymer comprising 6FNPM and methyl methacrylate (MMA) in a weight ratio of 50/50 (27/73 in mole ratio), but this material is comparatively high in a refractive index. Also JP2-110112A discloses an optical material obtained from a copolymer comprising 6FNPM and MMA in a weight ratio of 90/ 10 (77/23 in mole ratio), but this material is inferior in flexibility. Further JP2-1711A discloses only a copolymer comprising 6FNPM in an amount of up to 20 % by mole.

### DISCLOSURE OF INVENTION

The present inventors have made intensive studies and have found that a fluorine-containing copolymer obtained in combination of 6FNPM or a compound analogous thereto, MMA and as case demands, other fluorine-containing monomer in a specific composition exhibits physical properties very useful as an optical material, and have completed the present invention. Those specific requisites are not disclosed and taught in prior art documents.

The present invention relates to an optical material (hereinafter referred to as "optical material 1") which comprises a fluorine-containing copolymer comprising from 32 to 36 % by mole of a structural unit (a) represented by the formula (1): 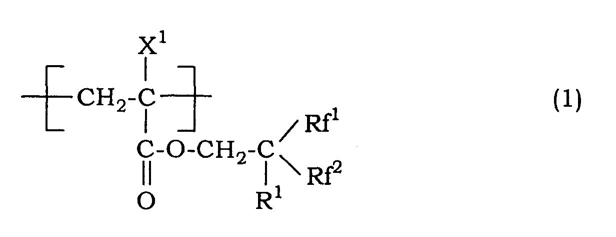 wherein X¹ is H, CH₃, F, CF₃ or Cl; Rf¹ and Rf² are the same or different and each is a perfluoroalkyl group having 1 to 5 carbon atoms; R¹ is a hydrocarbon group having 1 to 5 carbon atoms which may be substituted with fluorine atom, and from 64 to 68 % by mole of a structural unit (b) derived from methyl methacrylate.

Also the present invention relates to a fluorine-containing optical material (hereinafter referred to as "optical material 2") which comprises a fluorine-containing copolymer comprising from 15 to 62 % by mole of the structural unit (a) represented by the above-mentioned formula (1), from 12 to 70 % by mole of a structural unit (b) derived from methyl methacrylate and from 1 to 40 % by mole of a structural unit (c) (excluding the structural unit (a)) derived from a fluorine-containing monomer which is copolymerizable therewith.

The fluorine-containing copolymer used for the optical material 2 is preferably a fluorine-containing copolymer comprising from 23 to 50 % by mole of the structural unit (a), from 33 to 70 % by mole of the structural unit (b) and from 1 to 40 % by mole of the structural unit (c).

The fluorine-containing copolymer which has a weight average molecular weight of from 10,000 to 1,000,000 and comprises from 32 to 36 % by mole of the structural unit (a) represented by the formula (1) and from 64 to 68 % by mole of the structural unit (b) derived from methyl methacrylate, and
a fluorine-containing copolymer which has a weight average molecular weight of from 10,000 to 1,000,000 and comprises from 15 to 62 % by mole of the structural unit (a) represented by the formula (1), from 12 to 70 % by mole of the structural unit (b) derived from methyl methacrylate and from 1 to 40 % by mole of a structural unit (c2) represented by the formula (2a): 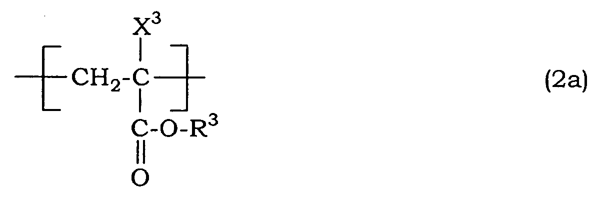 wherein X³ is H, CH₃, F, CF₃ or Cl; R³ is H or a fluoroalkyl group; the structural unit represented by the formula (1) is excluded, and when R³ is H, X³ is neither H nor CH₃,
which can be used for the optical materials 1 and 2 of the present invention, respectively are novel fluorine-containing copolymers.

### BEST MODE FOR CARRYING OUT THE INVENTION

The optical material 1 of the present invention comprises the copolymer comprising from 32 to 36 % by mole of the structural unit (a) represented by the formula (1) and derived from a fluoroacrylate derivative and from 64 to 68 % by mole of the structural unit (b) derived from methyl methacrylate (MMA).

In the fluoroacrylate derivative (1), it is preferable that X¹ is H, CH₃, F, CF₃ or Cl, particularly preferably CH₃ or F, further preferably CH₃; Rf¹ and Rf² are the same or different and each is a perfluoroalkyl group having 1 to 5 carbon atoms, concretely CF₃, CF₂CF₃, CF₂CF₂CF₃, CF₂CF₂CF₂CF₃ or CF₂CF₂CF₂CF₂CF₃, particularly preferably CF₃; R¹ is a hydrocarbon group having 1 to 5 carbon atoms which may be substituted with fluorine atom, concretely CH₃, CH₂CH₃, CH₂CH₂CH₃, CH₂CH₂CH₂CH₃, CH₂CH₂CH₂CH₂CH₃, CH₂CF₃, CH₂CH₂CF₃ or CH₂CF₂CF₃, particularly preferably CH₃.

Non-limiting examples of the compound introducing the structural unit (a) are hexafluoroneopentyl methacrylate (6FNPM: X¹=CH₃, Rf¹=Rf²=CF₃, R¹=CH₃), hexafluoroneopentyl α-fluoroacrylate (6FNPF: X¹=F, Rf¹=Rf²=CF₃, R¹=CH₃), 2,2-bistrifluoromethylbutyl methacrylate (X¹=CH₃, Rf¹=Rf²=CF₃, R¹=CH₂CH₃), 2,2-bistrifluoromethylbutyl α-fluoroacrylate (X¹=F, Rf¹=Rf²=CF₃, R¹=CH₂CH₃), 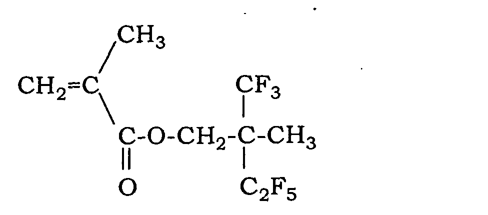 wherein X¹=CH₃, Rf¹=CF₃, Rf²=C₂F₅, R¹=CH₃, 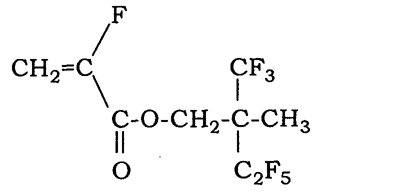 wherein X¹=F, Rf¹=CF₃, Rf²=C₂F₅, R¹=CH₃, 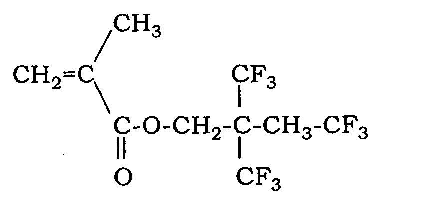 wherein X¹=CH₃, Rf¹=CF₃, Rf²=CF₃, R¹=CH₂CF₃
and the like. Among them, 6FNPM and 6FNPF are preferred from the viewpoint of excellent heat resistance and easy synthesis, and 6FNPM is particularly preferred.

If the amount of the structural unit (a) is less than 32 % by mole, a refractive index is increased, for example, like the copolymer in a weight ratio of 50/50 (namely, 27 / 73 in mole ratio) disclosed in JP1-149808A, and an effect of the present invention cannot be exhibited sufficiently. A high Tg, a low refractive index and excellent flexibility can be obtained within such a very narrow range of an amount of the structural unit (a). If the amount of the structural unit (a) exceeds 36 % by mole, the optical material 1 becomes hard and fragile, and is difficult to be applied to products requiring flexibility such as a clad material for optical fibers. A lower limit of the amount of the structural unit (a) is preferably 33 % by mole, and a preferred upper limit thereof is 35 % by mole.

The optical material 2 of the present invention comprises the fluorine-containing copolymer containing three or more monomers which comprises the structural unit (a) and the structural unit (b) as essential components and further the structural unit (c) derived from a fluorine-containing monomer and as case demands, a structural unit (d) as an optional component derived from a copolymerizable monomer other than the monomers for the structural units (a) and (c).

In the optical material 2, if the amount of the structural unit (a) is decreased, Tg decreases and a refractive index increases, and both of a high Tg (heat resistance) and a low refractive index cannot be satisfied at the same time. A lower limit of the amount of the structural unit (a) is preferably 20 % by mole, particularly preferably 28 % by mole. As the amount of the structural unit (a) is increased, mechanical properties such as flexibility become unsuitable for the use as an optical material. An upper limit thereof is 60 % by mole, preferably 50 % by mole.

Also if the amount of the structural unit (b) is decreased, mechanical properties such as flexibility become unsuitable for the use as an optical material. A lower limit of the amount of the structural unit (b) is preferably 20 % by mole, particularly preferably 33 % by mole. As the amount of the structural unit (b) is increased, the fluorine-containing structural unit is decreased, and both of a high Tg (heat resistance) and a low refractive index cannot be satisfied at the same time. An upper limit thereof is preferably 70 % by mole, particularly preferably 68 % by mole.

The structural unit (c) makes a refractive index low and Tg high due to fluorine atoms contained therein, and also contributes to enhance flexibility. Therefore, when the amount of the structural unit (a) is small, the amount of the structural unit (c) is increased, and when the amount of the structural unit (a) is large, the amount of the structural unit (c) is adjusted within a range of from 1 to 40 % by mole to enhance flexibility while maintaining the balance with the amount of the structural unit (b).

Usually in order to obtain a copolymer having a composition in an intended mole ratio, monomers having the respective parts by weight corresponding to mole ratios may be polymerized. For example, in the case of the optical material 2 of the present invention, when the molecular weights of each monomer providing the structural units (a), (b) and (c) are assumed to be M1, M2 and M3, respectively and the mole ratios thereof are assumed to be m1, m2 and m3, respectively, a weight fraction of the monomer providing the structural unit (a) is represented by (m1 x M1)/(ml x M1 + m2 x M2 + m3 x M3), a weight fraction of the monomer providing the structural unit (b) is represented by (m2 x M2) / (m1 × M1 + m2 × M2 + m3 × M3), and a weight fraction of the monomer providing the structural unit (c) is represented by (m3 × M3)/(m1 × M1 + m2 × M2 + m3 × M3).

In the fluorine-containing copolymer used in the optical material 2, the preferred structural unit (c) is a structural unit (c1) represented by the formula (2): 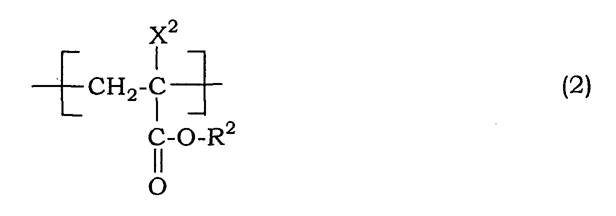 wherein X² is H, CH₃, F, CF₃ or Cl; R² is H or a fluoroalkyl group; the structural unit represented by the formula (1) is excluded, and when R² is H, X² is neither H nor CH₃,

When the structural unit (c1) is used as the structural unit (c), Tg and a refractive index can be adjusted more minutely.

X² is preferably H, CH₃, F, CF₃ or Cl, particularly preferably CH₃ or F, further preferably CH₃.

Examples of R² are, for instance, -CH₂CF₃, -CH₂CF₂CF₃, - CH(CF₃)₂, -CH₂(CF₂)₄F, -CH₂CH₂(CF₂)₄F, -CH₂CH₂(CF₂)₆F, - CH₂CH₂(CF₂)₈F, -CH₂CF₂CF₂H, -CH₂CF₂CF₂CF₂H, -CH₂CF₂CFHCF₃, - CH₂(CF₂)₄H, -CH₂(CF₂)₅H, -CH₂(CF₂)₆H, -CH₂(CF₂)₈H and the like.

Particularly preferred structural unit (c1) is the structural unit (c2) represented by the formula (2a): 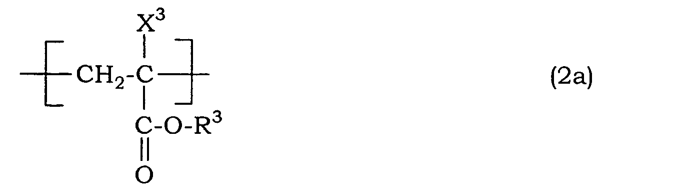 wherein X³ and R³ are as defined supra.

Particularly when the number of carbon atoms of R² or R³ in the structural unit (c1) or (c2), respectively is decreased, an effect of imparting flexibility tends to be lowered, and in the case of a long chain, heat resistance tends to be lowered (Tg decreases). The number of carbon atoms is preferably from 4 to 6. Further it is preferable that an end of R² or R³ is H from the viewpoint of excellent compatibility with polymethyl methacrylate (PMMA) and excellent solubility in a solvent.

Concretely R² or R³ is preferably a fluoroalkyl group represented by the formula (3):

-CH₂CₙF ₂ₙH (3)

wherein n is an integer of from 3 to 5, and is further preferably - CH₂C₄F₈H.

It is preferable that in the formulae (2) and (2a) representing the structural units (c1) and (c2), respectively, X² and X³ are -CH₃ because uniformity of copolymerization with MMA of the structural unit (b) is excellent.

Examples of the preferred monomer providing the structural unit (c) are, for instance,

### Methacryl monomers:

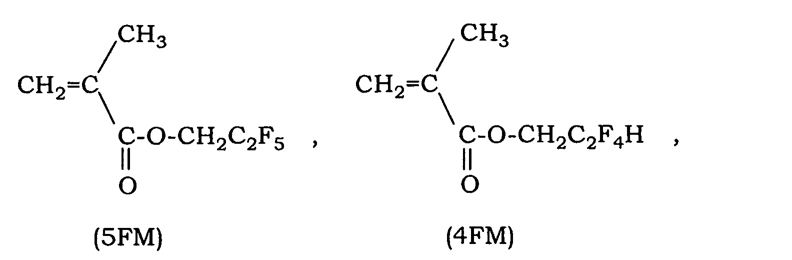

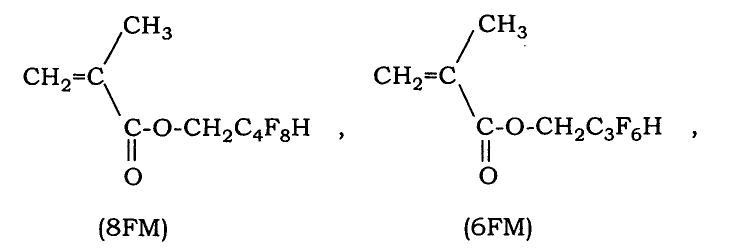

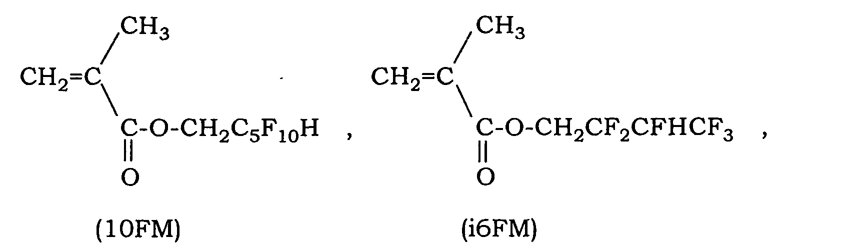

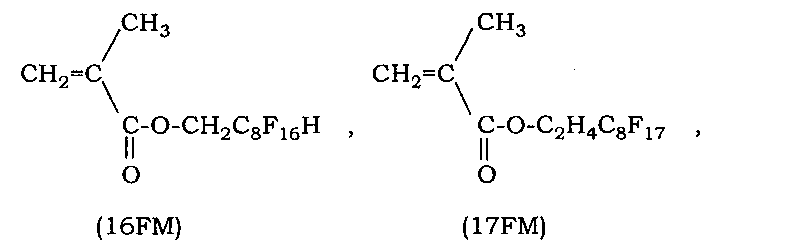

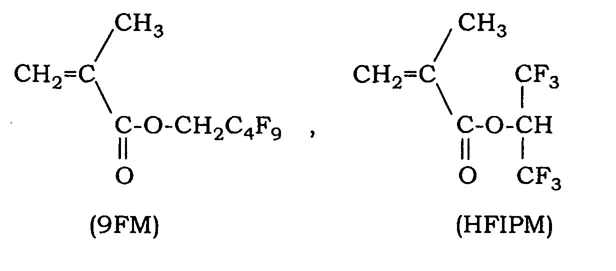

### α-Trifluoroacryl monomers:

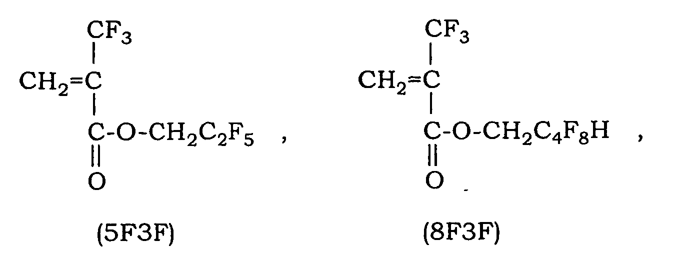

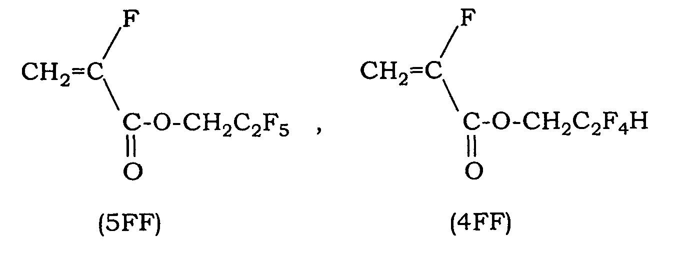

### α-Fluoroacryl monomers:

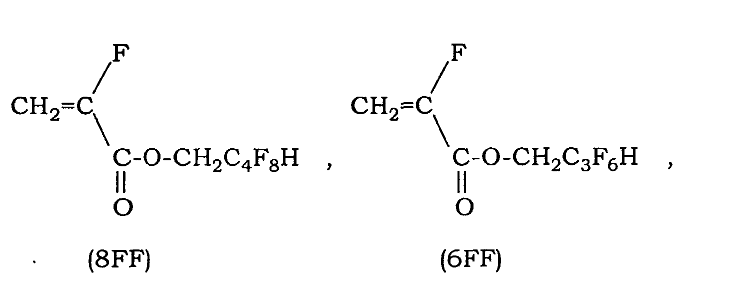

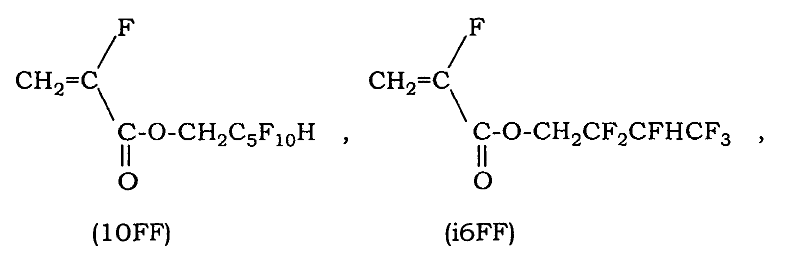

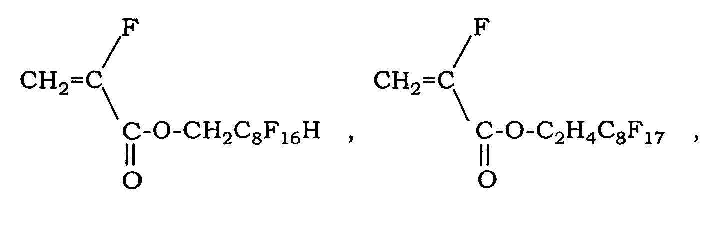

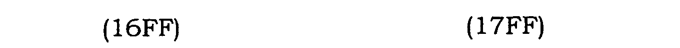

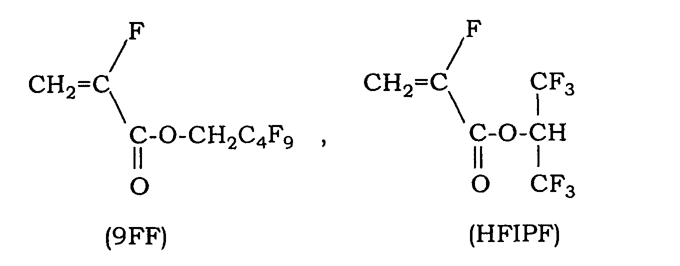

### Acryl monomers:

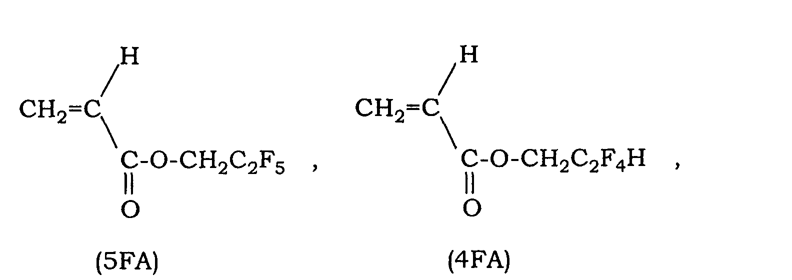

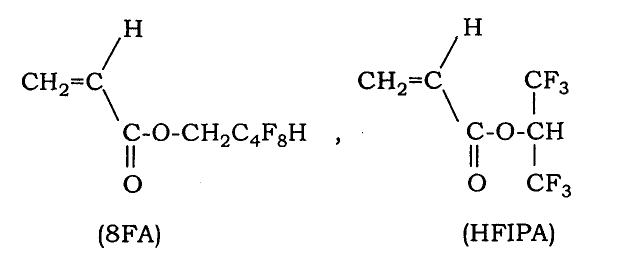

### α-Chloroacryl monomers:

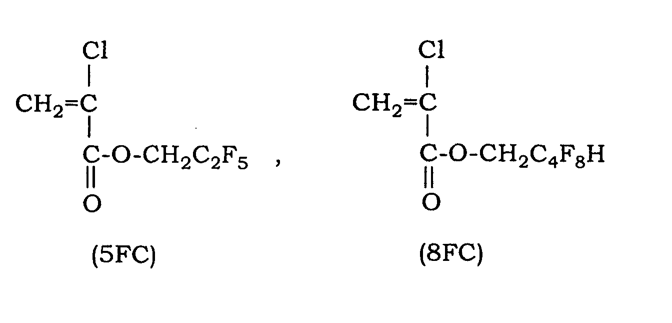

and the like. Among them, 8FM, 6FM, 10FM and HFIPM are preferred particularly because bending property, mechanical properties and heat resistance thereof are excellent.

In the present invention, a copolymer comprising the above-mentioned structural units (a), (b) and (c) (c1 and c2) and the structural unit (d) derived from a non-fluorine-containing monomer (excluding methyl methacrylate) being copolymerizable with the monomers therefor can be used.

Examples of the copolymerizable non-fluorine-containing monomer providing the structural unit (d) are acrylic acid (AA), methacrylic acid (MA), 2-hydroxyethyl methacrylate (2-HEMA), glycidyl methacrylate (GMA), ethyl acrylate (EA) and the like. Particularly acrylic acid and methacrylic acid are preferred because property for increasing mechanical strength can be imparted to the copolymer. The content of structural unit (d) in the copolymer is from 0 to 10 % by mole, preferably from 0 to 5 % by mole, particularly preferably from 0 to 1 % by mole. A lower limit of the content of structural unit (d) may be one exhibiting an effect of copolymerization thereof, and is usually, for example, about 0.01 % by mole.

Non-limiting examples of the preferred fluorine-containing copolymer for the optical material 2 are 6FNPM / MMA/ 8FM, 6FNPF/MMA/8FM, 6FNPM/MMA/HFIPM, 6FNPM/MMA/ 10FM, 6FNPM/MMA/8FM/MA and the like. Particularly 6FNPM/MMA/8FM and 6FNPM/MMA/8FM/MA are preferred from the viewpoint of excellent bending property and heat resistance.

A weight average molecular weight of the fluorine-containing copolymer used for the optical materials 1 and 2 (hereinafter referred to simply as "optical materials" unless discriminated from each other) of the present invention is preferably from 10,000 to 1,000,000, further preferably from 50,000 to 800,000, particularly preferably from 100,000 to 500,000 because of good solubility in a solvent, a rather low melt viscosity and good moldability.

The optical materials of the present invention have a high Tg, a low refractive index and excellent flexibility, and preferred are those having Tg of not less than 100°C, a refractive index of not more than 1.440 and a fluorine content of not less than 20 % by weight.

Tg is preferably not less than 105°C. The upper limit of Tg is usually up to 150°C, and the higher, the better. The refractive index is preferably not more than 1.430. The lower limit of refractive index is up to 1.415, and the lower, the more preferable. The fluorine content is preferably not less than 30 % by weight, further preferably not less than 35 % by weight. The upper limit of fluorine content is determined depending on the polymer composition, and is about 50 % by weight.

With respect to Tg (glass transition temperature) defined in the present invention, by using DSC (differential scanning calorimeter), in the 1st run, temperature is raised up to 200°C at a temperature elevating rate of 10°C/min, followed by maintaining at 200°C for one minute and cooling down to 25°C at a temperature decreasing rate of 10°C/min, and then a center point of heat absorption curve obtained in the 2nd run of heating at a temperature elevating rate of 10°C/min is assumed to be Tg.

Also the refractive index is measured with an Abbe's refractometer at 25°C using sodium D line as light source.

The fluorine content (% by weight) is obtained by burning 10 mg of sample by an oxygen flask combustion method, absorbing cracked gas in 20 ml of de-ionized water and then measuring a fluorine ion concentration in the fluorine ion-containing solution through fluoride-ion selective electrode method (using a fluorine ion meter model 901 available from Orion).

The optical materials of the present invention are, as mentioned supra, different from conventional optical materials from the viewpoint of excellent flexibility. Flexibility is important characteristic required in flexible devices, for example, optical fiber, optical interconnection and flexible circuit.

For evaluation of flexibility, a fluorine-containing copolymer is heated to 230°C and extruded through an orifice to make 1 mm diameter copolymer fibers. One roll of the fiber is wound on round steel bars having different radiuses in an environment of 25°C, and flexibility is evaluated by a radius of the round bar when cracking occurs on the copolymer fiber. In the present invention, round bars having a radius of 6 mm, 10 mm, 15 mm, 20 mm and 30 mm are used.

Among fluorine-containing copolymers having a polymer composition beyond the present invention, there are ones satisfying the requirements for refractive index, but flexibility thereof is 15 mm (radius of round bar) or more. In the optical materials of the present invention, by further adjusting the polymer composition while the mentioned characteristics are satisfied, there can be provided an optical material in which cracking does not occur when wounding on a 10 mm (radius of round bar) and even when wounding on a 6 mm (radius of round bar).

The optical materials of the present invention also exhibit other excellent properties such as a thermal decomposition temperature Td, light transmittance and a melt index MI. Those properties are explained in examples.

The optical materials of the present invention can be used as materials for various optical devices, for example, material for a clad of optical fiber, antireflection coating material, lens material, optical waveguide material, prism material, optical window material, optical memory disc material, non-linear optical element material, hologram material, photorefractive material, material for sealing of light emitter, liquid crystal panel material and the like.

The optical materials of the present invention are suitable as a material for clad for optical fiber, particularly as a material for clad for optical fiber using a core made of polymethyl methacrylate (PMMA).

Optical fibers produced using PMMA as a material for core and the optical materials of the present invention as a material for clad have a high Tg, excellent heat resistance and excellent flexibility in addition to characteristics as an optical fiber, and therefore, are useful as a fiber to be provided in a narrow space under high temperature environment. The optical materials of the present invention exhibit an excellent effect which cannot be seen in other materials when provided, for example, in an engine room, instrument panel, roof, inside of head lamp and the like of car.

The present invention also relates to the fluorine-containing copolymer having a weight average molecular weight of from 10,000 to 1,000,000 and comprising from 32 to 36 % by mole of the structural unit (a) represented by the above-mentioned formula (1) and from 64 to 68 % by mole of the structural unit (b) derived from methyl methacrylate, and the fluorine-containing copolymer having a weight average molecular weight of from 10,000 to 1,000,000 and comprising from 15 to 62 % by mole of the structural unit (a) represented by the above-mentioned formula (1), from 12 to 70 % by mole of the structural unit (b) derived from methyl methacrylate and from 1 to 40 % by mole of the structural unit (c2) represented by the above-mentioned formula (2a).

Preferred examples of those fluorine-containing copolymers are the same as those raised supra in the explanation of the optical materials.

For preparation of the fluorine-containing copolymers of the present invention, there can be employed polymerization methods which are used generally such as bulk polymerization method, solution polymerization method, suspension polymerization method and emulsion polymerization method.

In the bulk polymerization method, solution polymerization method and suspension polymerization method, examples of a polymerization initiator are, for instance, radical polymerization initiators such as azobisisobutyronitrile, 1,1-bis(t-butylperoxy)3,3,5-trimethylcyclohexane, dialkyl peroxide, diacyl peroxide, peroxy ketal and di-t-butyl peroxide (Perbutyl D). In the emulsion polymerization method, there are used, for example, persulfates such as ammonium persulfate and potassium persulfate; or redox initiators comprising oxidizing agents such as the mentioned persulfates, reducing agents such as sodium sulfite, and salts of transition metals such as ferrous sulfate (II).

In the above-mentioned bulk polymerization method, solution polymerization method and suspension polymerization method, it is preferable to use a chain transfer agent such as mercaptans for adjusting a molecular weight of the fluorine-containing copolymer. Examples of the chain transfer agent are, for instance, compounds having mercapto group such as n-butyl mercaptane, lauryl mercaptane, n-octyl mercaptane, n-butyl mercaptoacetate, isooctyl mercaptoacetate and methyl mercaptoacetate.

In the above-mentioned solution polymerization method and suspension polymerization method, represented examples of a solvent are fluorine-containing solvents such as HCFC-225 and hydrocarbon solvents such as butyl acetate and methyl isobutyl ketone.

A polymerization temperature is usually determined within a range of from 0°C to 100°C in consideration of a decomposition temperature of the polymerization initiator, and in many cases, a polymerization temperature within a range of from 10°C to 80°C is preferably employed.

In the present invention, the weight average molecular weight in the above-mentioned polymerization reaction can be adjusted usually within a range of from 10,000 to 1,000,000 (based on polystyrene according to GPC), preferably from 100,000 to 500,000.

Those fluorine-containing copolymers have the above-mentioned ranges of Tg, refractive index and fluorine content.

The present invention is then explained by means of examples, but is not limited to them. In Examples and Comparative Examples, "part" means "part by weight".

In the following Examples, physical properties are evaluated by using the following equipment and measuring conditions.
(1) NMR: AC-300 available from BRUKER
   Measuring conditions of ¹H-NMR: 300 MHz (tetramethylsilane = 0 ppm)
   Measuring conditions of ¹⁹F-NMR: 300 MHz (trichlorofluoromethane = 0 ppm)
(2) IR analysis: Measuring is carried out at room temperature with a Fourier-transform infrared spectrophotometer 1760X available from Perkin Elmer Co., Ltd.
(3) GPC: A number average molecular weight is calculated from the data measured with gel permeation chromatography (GPC) by using GPC HLC-8020 available from Toso Kabushiki Kaisha and columns available from Shodex (one GPC KF-801, one GPC KF-802 and two GPC KF-806M were connected in series) and flowing tetrahydrofuran (THF) as a solvent at a flowing rate of 1 ml/min.

### EXAMPLE 1

In a 500 ml glass flask, 50 parts of 6FNPM, 30 parts of methyl methacrylate (MMA), 20 parts of 8FM, 0.04 part of n-lauryl mercaptane and 0.025 part of azoisobutyronitrile were dissolved and mixed, followed by repeating deaeration and replacement of the inside of the flask with nitrogen. Then after sealing of the flask, polymerization was carried out at 70°C for 16 hours.

After completion of the polymerization, 300 g of acetone was added to the product to dissolve the product therein, and the obtained solution was poured into 5 liter of methanol. Then the precipitated polymerization product was separated from the solution, followed by drying at 100°C for 10 hours under reduced pressure to obtain 92 g (yield 92 %) of solid polymer.

According to ¹H-NMR, ¹⁹F-NMR and IR analyses, the obtained polymer was found to be a copolymer comprising 6FNPM, MMA and 8FM in a percent by mole ratio of 34/54/12. The fluorine content thereof was 32 % by weight.

Also the weight average molecular weight, refractive index, glass transition temperature, thermal decomposition temperature, melt index, light transmission and flexibility of the obtained copolymer were determined. The results are shown in Table 1.

Those properties were measured by the following methods.
(1) Weight average molecular weight (Mw)
   Measured by GPC method (based on polystyrene)
(2) Refractive index
   Measured by the method mentioned supra (25°C). A refractometer used is Abbe's refractometer available from Kabushiki Kaisha Atago Kogaku Kiki Seisakusho.
(3) Glass transition temperature (Tg)
   Measured by the method mentioned supra. A differential scanning calorimeter used is one available from Seiko Denshi Kabushiki Kaisha.
(4) Thermal decomposition temperature (Td)
   A thermal decomposition temperature where the weight reduction begins is measured at a heating rate of 10°C/min using a thermogravimeter TGA-50 available from Shimadzu Corporation.
(5) Melt index (MI)
   A KOUKA-SHIKI flow tester available from Shimadzu Corporation is used. Each polymer is put in a cylinder having an inner diameter of 9.5 mm, and after maintained at 230°C for 5 minutes, is extruded by a 7 kg piston into a piston weight portion, through an orifice having an inner diameter of 2.1 mm and a length of 8 mm. The melt index is represented by a weight in gram of the copolymer extruded for 10 minutes.
(6) Light transmission (T)
   Polymethyl methacrylate for a core and the fluorine-containing copolymer for a clad are spun into a composite fiber at 230°C to make an optical fiber having a diameter of 300 µm (thickness of clad 15 µm) and a length of 500 mm. A transmittance of this optical fiber is measured with light having a wavelength of from 650 to 680 nm.
(7) Flexibility (F)
   Measured by the method mentioned supra.

### EXAMPLE 2

A fluorine-containing copolymer was prepared in the same manner as in Example 1 except that 60 parts of 6FNPM, 15 parts of MMA and 25 parts of 8FM were used as monomers. The composition and properties of the obtained fluorine-containing copolymer were measured in the same manner as in Example 1. The results are shown in Table 1.

### EXAMPLE 3

A fluorine-containing copolymer was prepared in the same manner as in Example 1 except that 45 parts of 6FNPM, 40 parts of MMA and 15 parts of 8FM were used as monomers. The composition and properties of the obtained fluorine-containing copolymer were measured in the same manner as in Example 1. The results are shown in Table 1.

### EXAMPLE 4

A fluorine-containing copolymer was prepared in the same manner as in Example 1 except that 58 parts of 6FNPM and 42 parts of MMA were used as monomers. The composition and properties of the obtained fluorine-containing copolymer were measured in the same manner as in Example 1. The results are shown in Table 1.

### COMPARATIVE EXAMPLE 1

A homopolymer of 6FNPM was prepared in the same manner as in Example 1 except that 100 parts of 6FNPM was used alone as a monomer. The composition and properties of the obtained fluorine-containing polymer were measured in the same manner as in Example 1. The results are shown in Table 1.

### COMPARATIVE EXAMPLE 2

A fluorine-containing copolymer was prepared in the same manner as in Example 1 except that 90 parts of 6FNPM and 10 parts of MMA were used as monomers. The composition and properties of the obtained fluorine-containing copolymer were measured in the same manner as in Example 1. The results are shown in Table 1.

### COMPARATIVE EXAMPLE 3

A fluorine-containing copolymer was prepared in the same manner as in Example 1 except that 50 parts of 6FNPM and 50 parts of MMA were used as monomers. The composition and properties of the obtained fluorine-containing copolymer were measured in the same manner as in Example 1. The results are shown in Table 1.

### COMPARATIVE EXAMPLE 4

A fluorine-containing copolymer was prepared in the same manner as in Example 1 except that 30 parts of 6FNPM and 70 parts of MMA were used as monomers. The composition and properties of the obtained fluorine-containing copolymer were measured in the same manner as in Example 1. The results are shown in Table 1.

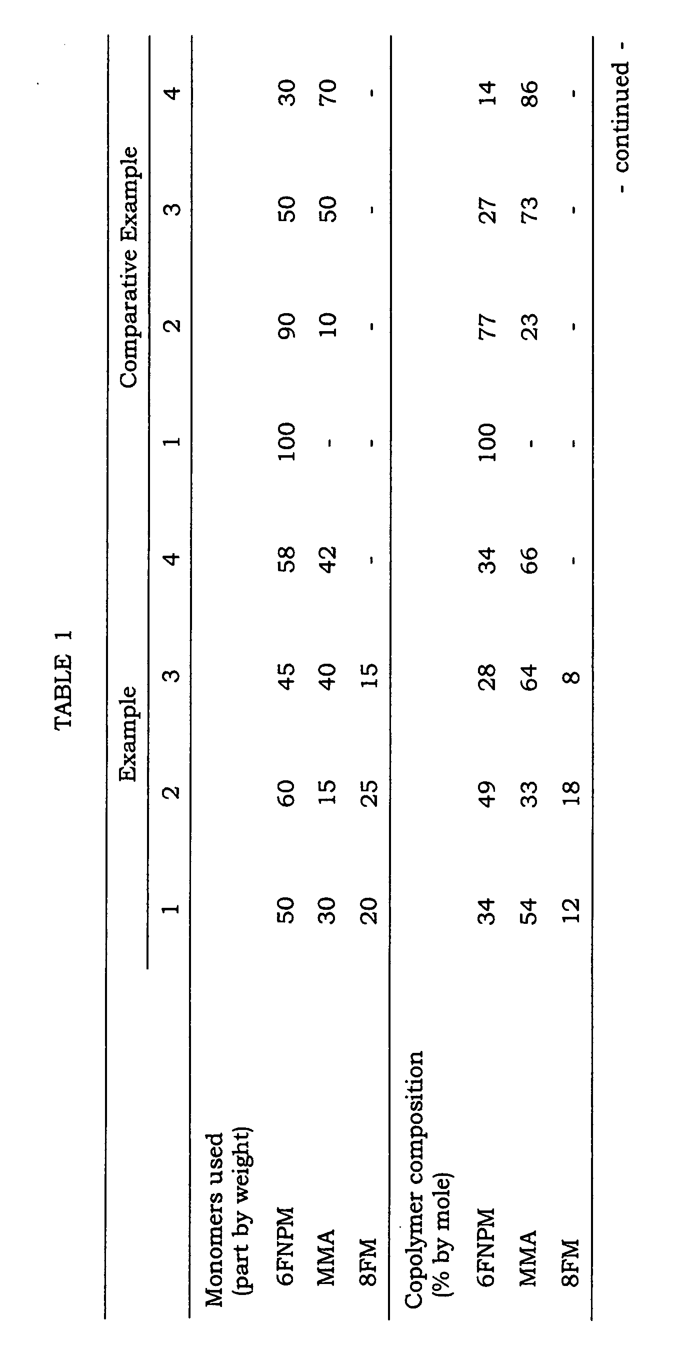

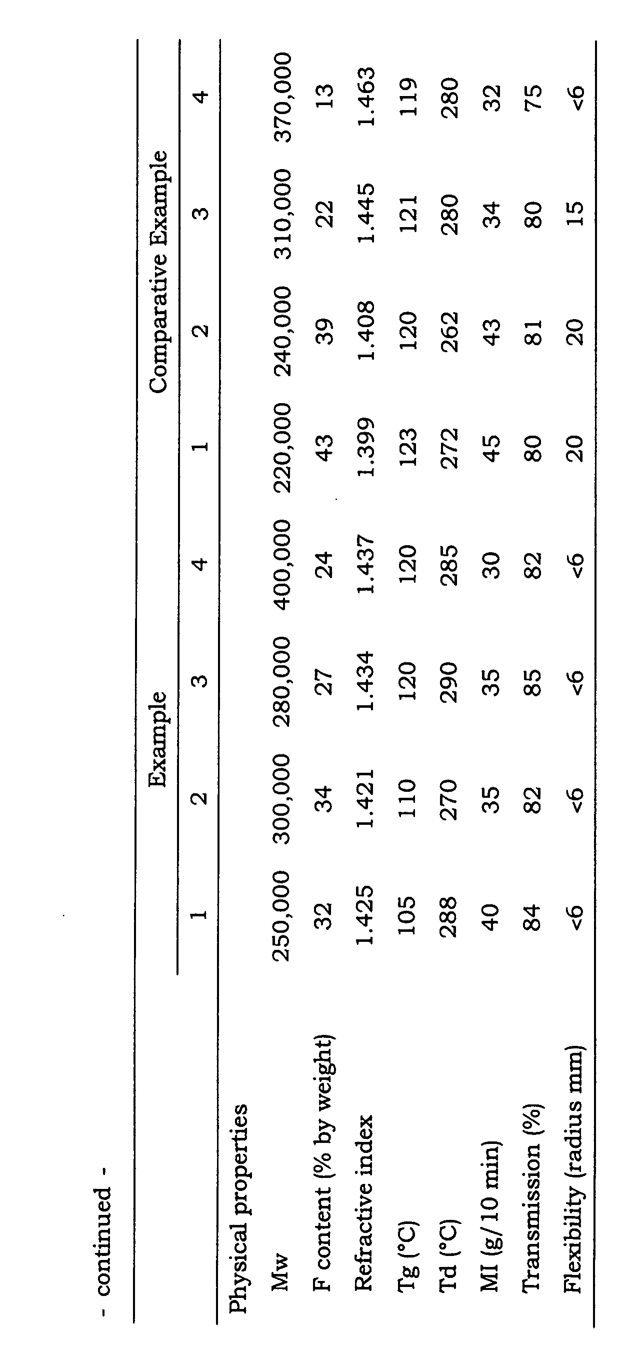

### EXAMPLE 5

A fluorine-containing copolymer was prepared in the same manner as in Example 1 except that 45 parts of 6FNPM, 35 parts of MMA and 20 parts of 4FM were used as monomers. The composition and properties of the obtained fluorine-containing copolymer were measured in the same manner as in Example 1. The results are shown in Table 2.

### EXAMPLE 6

A fluorine-containing copolymer was prepared in the same manner as in Example 1 except that 50 parts of 6FNPM, 30 parts of MMA and 20 parts of 8FF were used as monomers. The composition and properties of the obtained fluorine-containing copolymer were measured in the same manner as in Example 1. The results are shown in Table 2.

### EXAMPLE 7

A fluorine-containing copolymer was prepared in the same manner as in Example 1 except that 50 parts of 6FNPF, 30 parts of MMA and 20 parts of HFIPM were used as monomers. The composition and properties of the obtained fluorine-containing copolymer were measured in the same manner as in Example 1. The results are shown in Table 2.

### EXAMPLE 8

A fluorine-containing copolymer was prepared in the same manner as in Example 1 except that 48 parts of 6FNPF, 35 parts of MMA and 17 parts of 8FM were used as monomers. The composition and properties of the obtained fluorine-containing copolymer were measured in the same manner as in Example 1. The results are shown in Table 2.

### EXAMPLE 9

A fluorine-containing copolymer was prepared in the same manner as in Example 1 except that 50 parts of 6FNPF, 30 parts of MMA and 20 parts of 8FF were used as monomers. The composition and properties of the obtained fluorine-containing copolymer were measured in the same manner as in Example 1. The results are shown in Table 2.

**TABLE 2**

| | Example | | | | |
|---|---|---|---|---|---|
| | 5 | 6 | 7 | 8 | 9 |
| Monomers used (part by weight) | | | | | |
| 6FNPM | 45 | 50 | - | - | - |
| 6FNPF | - | - | 50 | 48 | 50 |
| MMA | 35 | 30 | 30 | 35 | 30 |
| 4FM | 20 | - | - | - | - |
| 8FF | - | 20 | - | - | 20 |
| HFIPM | - | - | 20 | - | - |
| 8FM | - | - | - | 17 | - |

| Copolymer composition (% by mole) | | | | | |
|---|---|---|---|---|---|
| 6FNPM | 27 | 34 | - | - | - |
| 6FNPF | - | - | 26 | 25 | 27 |
| MMA | 57 | 54 | 58 | 65 | 60 |
| 4FM | 16 | - | - | - | - |
| 8FF | - | 12 | - | - | 13 |
| HFIPM | - | - | 16 | - | - |
| 8FM | - | - | - | 10 | - |

| Physical properties | | | | | |
|---|---|---|---|---|---|
| Mw | 350,000 | 280,000 | 300,000 | 250,000 | 220,000 |
| F content (% by weight) | 27 | 33 | 34 | 32 | 36 |
| Refractive index | 1.435 | 1.422 | 1.411 | 1.416 | 1.408 |
| Tg (°C) | 107 | 105 | 114 | 105 | 106 |
| Td (°C) | 280 | 295 | 300 | 290 | 310 |
| MI (g/ 10 min) | 32 | 36 | 36 | 43 | 44 |
| Transmission (%) | 85 | 84 | 83 | 84 | 83 |
| Flexibility (radius mm) | <6 | <6 | <6 | <6 | <6 |

### INDUSTRIAL APPLICABILITY

The fluorine-containing optical materials according to the present invention assures a high Tg, a low refractive index, good flexibility and low cost, which could not be attained in conventional optical materials, and are very useful as materials for heat resistant plastic optical fiber clad, particularly for plastic optical fiber for cars.

## Claims

1. A fluorine-containing optical material which comprises a fluorine-containing copolymer comprising from 32 to 36 % by mole of a structural unit (a) represented by the formula (1): 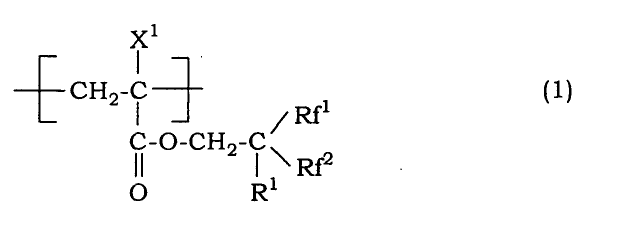 wherein X¹ is H, CH₃, F, CF₃ or Cl; Rf¹ and Rf² are the same or different and each is a perfluoroalkyl group having 1 to 5 carbon atoms; R¹ is a hydrocarbon group having 1 to 5 carbon atoms which may be substituted with fluorine atom, and from 64 to 68 % by mole of a structural unit (b) derived from methyl methacrylate.

2. A fluorine-containing optical material which comprises a fluorine-containing copolymer comprising from 15 to 62 % by mole of a structural unit (a) represented by the formula (1): 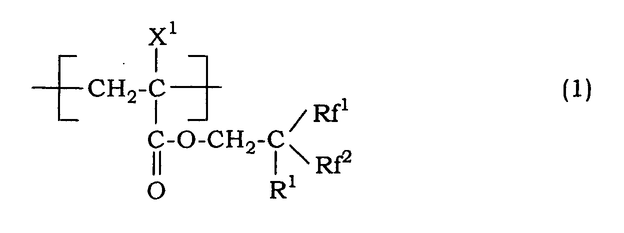 wherein X¹ is H, CH₃, F, CF₃ or Cl; Rf¹ and Rf² are the same or different and each is a perfluoroalkyl group having 1 to 5 carbon atoms; R¹ is a hydrocarbon group having 1 to 5 carbon atoms which may be substituted with fluorine atom, from 12 to 70 % by mole of a structural unit (b) derived from methyl methacrylate and from 1 to 40 % by mole of a structural unit (c) (excluding the structural unit (a)) derived from a fluorine-containing monomer which is copolymerizable therewith.

3. The fluorine-containing optical material of Claim 1 or 2, wherein in the formula (1), X¹ is CH₃.

4. The fluorine-containing optical material of Claim 3, wherein the fluorine-containing copolymer comprises from 23 to 50 % by mole of the structural unit (a), from 33 to 70 % by mole of the structural unit (b) and from 1 to 40 % by mole of the structural unit (c).

5. The fluorine-containing optical material of any of Claims 2 to 4, wherein in the fluorine-containing copolymer, the structural unit (c) is a structural unit (c1) represented by the formula (2): 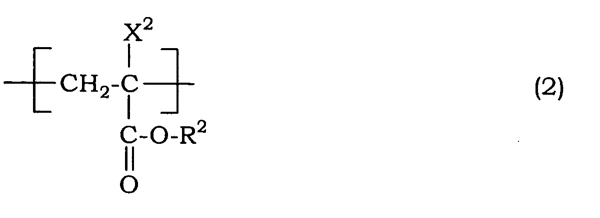 wherein X² is H, CH₃, F, CF₃ or Cl; R² is H or a fluoroalkyl group; the structural unit represented by the formula (1) is excluded, and when R² is H, X² is neither H nor CH₃.

6. The fluorine-containing optical material of Claim 5, wherein in the formula (2), R² is a fluoroalkyl group having 3 to 8 carbon atoms.

7. The fluorine-containing optical material of Claim 5 or 6, wherein the fluorine-containing copolymer comprises from 23 to 50 % by mole of the structural unit (a), from 33 to 70 % by mole of the structural unit (b) and from 1 to 40 % by mole of the structural unit (c1).

8. The fluorine-containing optical material of any of Claims 5 to 7, wherein in the fluorine-containing copolymer, the number of carbon atoms of R² in the formula (2) representing the structural unit (c1) is from 4 to 6.

9. The fluorine-containing optical material of Claim 8, wherein in the fluorine-containing copolymer, R² in the formula (2) representing the structural unit (c1) is represented by the formula (3):
-CH₂CₙF₂ₙH (3)
wherein n is an integer of from 3 to 5.

10. The fluorine-containing optical material of Claim 8, wherein in the fluorine-containing copolymer, R² in the formula (2) representing the structural unit (c1) is -CH₂C₄F₈H.

11. The fluorine-containing optical material of any of Claims 5 to 10, wherein in the fluorine-containing copolymer, X² in the formula (2) representing the structural unit (c1) is -CH₃.

12. The fluorine-containing optical material of any of Claims 1 to 11, which has a glass transition temperature of not less than 100°C, a refractive index of not more than 1.440 and a fluorine content of not less than 20 % by weight.

13. The fluorine-containing optical material of Claim 12, wherein the glass transition temperature is not less than 105°C.

14. The fluorine-containing optical material of Claim 12 or 13, wherein the refractive index is not more than 1.430.

15. The fluorine-containing optical material of any of Claims 12 to 14, wherein the fluorine content is not less than 30 % by weight.

16. A material for clad of optical fiber which is obtained from the fluorine-containing optical material of any of Claims 1 to 15.

17. A fluorine-containing copolymer which has a weight average molecular weight of from 10,000 to 1,000,000 and comprises from 32 to 36 % by mole of a structural unit (a) represented by the formula (1) : 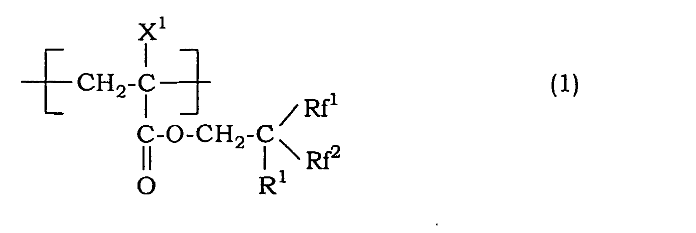 wherein X¹ is H, CH₃, F, CF₃ or Cl; Rf¹ and Rf² are the same or different and each is a perfluoroalkyl group having 1 to 5 carbon atoms; R¹ is a hydrocarbon group having 1 to 5 carbon atoms which may be substituted with fluorine atom, and from 64 to 68 % by mole of a structural unit (b) derived from methyl methacrylate.

18. The fluorine-containing copolymer of Claim 17, wherein in the formula (1), X¹ is CH₃.

19. A fluorine-containing copolymer which has a weight average molecular weight of from 10,000 to 1,000,000 and comprises from 15 to 62 % by mole of a structural unit (a) represented by the formula (1) : 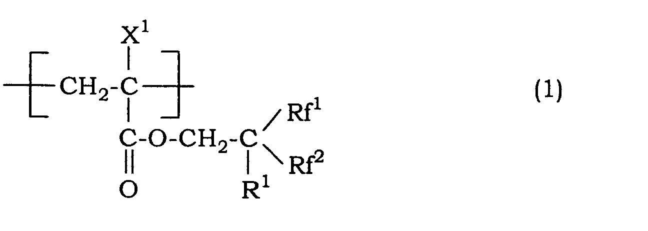 wherein X¹ is H, CH₃, F, CF₃ or Cl; Rf¹ and Rf² are the same or different and each is a perfluoroalkyl group having 1 to 5 carbon atoms; R¹ is a hydrocarbon group having 1 to 5 carbon atoms which may be substituted with fluorine atom, from 12 to 70 % by mole of a structural unit (b) derived from methyl methacrylate and from 1 to 40 % by mole of a structural unit (c2) represented by the formula (2a): 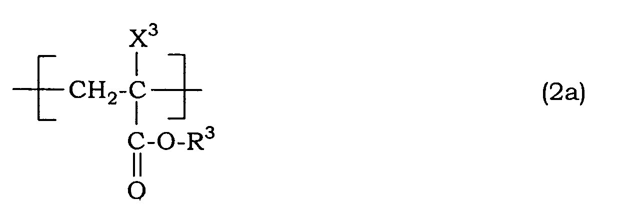 wherein X³ is H, CH₃, F, CF₃ or Cl; R³ is H or a fluoroalkyl group; the structural unit represented by the formula (1) is excluded, and when R³ is H, X³ is neither H nor CH₃.

20. The fluorine-containing copolymer of Claim 19, wherein in the formula (1), X¹ is CH₃.

21. The fluorine-containing copolymer of Claim 19 or 20, which comprises from 23 to 50 % by mole of the structural unit (a), from 33 to 70 % by mole of the structural unit (b) and from 1 to 40 % by mole of the structural unit (c2).

22. The fluorine-containing copolymer of any of Claims 19 to 21, wherein the number of carbon atoms of R³ in the formula (2a) representing the structural unit (c2) is from 4 to 6.

23. The fluorine-containing copolymer of Claim 22, wherein R³ in the formula (2a) representing the structural unit (c2) is represented by the formula (3):
-CH₂CₙF₂ₙH (3)
wherein n is an integer of from 3 to 5.

24. The fluorine-containing copolymer of Claim 22, wherein R³ in the formula (2a) representing the structural unit (c2) is -CH₂C₄F₈H.

25. The fluorine-containing copolymer of any of Claims 19 to 24, wherein X³ in the formula (2a) representing the structural unit (c2) is -CH₃.
